# EUROPÄISCHE PATENTSCHRIFT

(11) **EP 2 480 468 B1**
(45) Veröffentlichungstag und Bekanntmachung des Hinweises auf die Patenterteilung: **13.03.2013**
(21) Anmeldenummer: 11739008.8
(22) Anmeldetag: 06.07.2011
(51) Int. Cl.: B65G 65/00, B65G 47/51

(54) **HOCHGESCHWINDIGKEITSSPEICHER**
HIGH-SPEED STORE
DISPOSITIF DE STOCKAGE À GRANDE VITESSE

(30) Priorität: 27.08.2010 DE 102010035670
(43) Veröffentlichungstag der Anmeldung: 01.08.2012
(73) Patentinhaber: Mall Herlan MB GmbH, 78579 Neuhausen ob Eck (DE)
(72) Erfinder: HIRSCHEK, Herwig, 86399 Bobingen (DE)
(74) Vertreter: Wagner, Kilian
(86) Internationale Anmeldenummer: PCT/EP2011/061394
(87) Internationale Veröffentlichungsnummer: WO 2012/025285

(56) Entgegenhaltungen:
- DE-U1-202006 009 652
- GB-A- 1 177 942

## Beschreibung

Die Erfindung betrifft eine Vorrichtung zum Zwischenspeichern von, vorzugsweise unlackierten, bevorzugt aus Metall bestehenden, Dosen mit einer anliefernden Fördereinrichtung, mit einer Zwischenspeichereinrichtung (für die Dosen) und mit einer Handhabungseinrichtung, die zum gleichzeitigen Überführen mehrerer Dosen von der Fördereinrichtung in die Zwischenspeichereinrichtung ausgebildet und angesteuert ist.

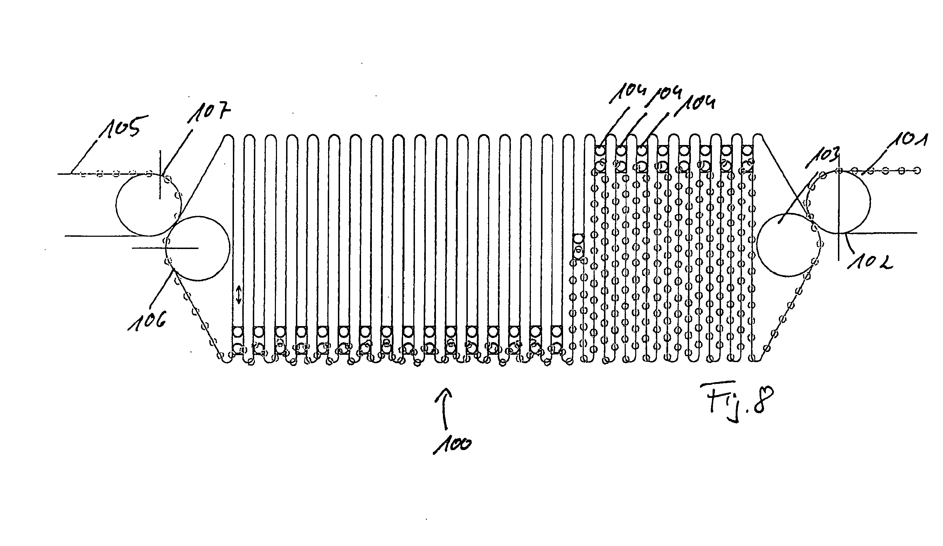

Bisher werden als Zwischenspeicher zum Zwischenspeichern von unlackierten Dosen zwischen einzelnen Fertigungsschritten in einer Dosenproduktionsanlage sogenannte, beispielhaft in Fig. 8 dargestellte Kettenspeicher 100 eingesetzt. Die Dosen werden von einer nicht dargestellten Produktionsmaschine über eine erste, Kettenstifte aufweisende Transportkette 101 zum Kettenspeicher 100 transportiert und in diesen über zwei miteinander zusammenwirkende Vakuum-Ladetrommeln 102, 103 überführt. Die Ladetrommeln sind mit Schiebeprismen ausgestaltet, wobei jedes Schiebeprisma durch Ansaugen jeweils eine Dose am Umfang der jeweiligen Ladetrommel hält. Durch die Schiebefunktion kann die mit Unterdruck gehaltene Dose von der Transportkette 101 abgenommen, auf die Ladetrommel 103 übergeben und von dieser auf den synchron laufenden Kettenspeicher 100 aufgeschoben werden.

Der Kettenspeicher 100 ist mit einer Vielzahl von Laufwagen 104 ausgestattet. Über die Höhenposition der Laufwagen 104 wird die wirksame Kettenlänge des Kettenspeichers 100 und damit die gespeicherte Dosenlänge eingestellt bzw. geregelt. Die Übergabe der Dosen vom Kettenspeicher 100 an eine zweite, abführende Transportkette 105 erfolgt über weitere zwei Ladetrommeln 106, 107, die in umgekehrter Laufrichtung zu den beladenen Ladetrommeln 102, 103 arbeiten.

Der Speicherkapazität bekannter Kettenspeicher 100 ist durch die Raumhöhe, in der Praxis maximal 6m, Grenzen gesetzt. So weist ein Kettenspeicher mit 6m Länge lediglich eine Speicherkapazität von etwa 2.800 Dosen auf, was bei einer Produktionsgeschwindigkeit von etwa 200 Dosen/min lediglich einer Speicherzeit von etwa 14min entspricht. Um höhere Produktionsleistungen erzielen zu können, bestehen Bestrebungen, größere Dosenspeichermengen zu realisieren.

Bekannte Kettenspeicher sind nicht nur in ihrer Speicherkapazität begrenzt. Zudem besteht das Problem, dass in der Praxis die Funktion des Lückenschließens nur bis etwa 250 Dosen/min technologisch beherrschbar ist. Höhere Geschwindigkeiten erzeugen Taumel- und Stoßbewegungen bei der Übergabe mithilfe von Ladetrommeln 102, 103, 105, 106.

Eine im Hinblick auf eine erhöhte Speicherkapazität verbesserte Zwischenspeichereinrichtung ist in der EP 2 192 061 A2 beschrieben. Im Gegensatz zu einem Kettenspeicher umfasst die bekannte Speichereinrichtung keine umlaufende, Kettenstifte aufweisende Transportkette, sondern stattdessen Transportbänder, auf denen die Dosen aufliegen, um die Dosen durch Einführen von Transportdornen (Einschubstäben) in die Dosen mittels einer Handhabungseinrichtung von dem zuliefernden Transportband abnehmen zu können. Die Zwischenspeicherung erfolgt nicht wie beim Kettenspeicher entlang einer sich bewegenden Kette, sondern in einer Hochregalspeichereinrichtung oder alternativ in einer Paternoster-Speichereinrichtung, in denen die mit Dosen versehenen Speicherbehälter voneinander beabstandet zwischengespeichert werden. Nachteilig bei dem Einsatz von Hochregalen- oder Paternoster-Speichereinrichtungen ist der immer noch vergleichsweise große Raumbedarf. Mit der Handhabungseinrichtung werden die Dosen mit Hilfe von Einschubsstäben mechanisch gegriffen, um 180° verschwenkt und unmittelbar aufeinander im Speicherbehälter abgelegt. Zwar kann hierdurch das Speichervolumen in einem Speicherbehälter minimiert werden, jedoch ist diese Vorgehensweise nicht für unlackierte Dosen geeignet, da gebürstete und gewaschene Metalldosen im unlackierten Zustand miteinander verhaken, was im schlimmsten Fall zum Stillstand der Zwischeneinrichtung bzw. zum Dosenverlust führen kann. Darüber hinaus wird wie beim Kettenspeicher die Raumtiefe mit der bekannten Zwischenspeichereinrichtung nicht genutzt.

Ferner ist nachteilig, dass mit dem Einschubsstäbe aufweisenden Handhabungssystem der bekannten Vorrichtung nur begrenzte Beschleunigungen oder Verzögerungen realisierbar sind, da ansonsten die Gefahr besteht, dass beim Übergeben der Dosen von der anliefernden Vordereinrichtung zu einer davon separaten ausliefernden Vordereinrichtungen Dosen von den die Dosen greifenden Dornen abgeschleudert werden, verrutschen oder taumeln.

Zusätzlich von Nachteil ist die begrenzte Möglichkeit des (Einzel-) Lückenschließens.

Aus der GB 1,177,942 ist eine Vorrichtung zum Transport von Zigarettenschachteln bekannt.

Die DE 20 2006 009 652 U1 zeigt einen Luftförderer für Flaschen.

Ausgehend von dem vorgenannten Stand der Technik liegt der Erfindung die Aufgabe zu Grunde, eine Vorrichtung im Verfahren zum Zwischenspeichern von, vorzugsweise unlackierten, insbesondere gebürsteten (Metall-) Dosen anzugeben mit dem Lücken optimal geschlossen werden können, ohne dass dabei die Gesamtgeschwindigkeit der Dosenproduktionsanlage beeinträchtigt wird. Bevorzugt soll zudem der zur Verfügung stehende Raum optimal für eine Zwischenspeicherung der Dosen genutzt werden, wobei das Verfahren und die Vorrichtung bevorzugt für den Einsatz bzw. die Realisierung in einer Dosenproduktionsanlage geeignet sein soll, mit welcher mehr als 300 Dosen/min vorzugsweise mehr als 400 Dosen/min, noch weiter bevorzugt mehr als 500 Dosen/min herstellbar.

Diese Aufgabe wird hinsichtlich der Vorrichtung mit den Merkmalen des Anspruchs 1 bzw. durch eine Verwendung einer solchen Vorrichtung zum, vorzugsweise liegenden, Zwischenspeichern von, bevorzugt unlackierten Dosen gelöst.

Hinsichtlich des Verfahrens wird die Aufgabe mit den Merkmalen des Anspruchs 13 gelöst.

Vorteilhafte Weiterbildungen der Erfindung sind in den Unteransprüchen angegeben.

Der Erfindung liegt der Gedanke zu Grunde, in Abkehr von der Lehre der EP 2 192 061 A2, auf eine von der zum Anliefern von Dosen zu der Zwischenspeichereinrichtung (Zwischenspeicher) anliefernde Fördereinrichtung separate ausliefernde Fördereinrichtung zu verzichten und stattdessen die anliefernde Fördereinrichtung gleichzeitig zum Ausliefern von Dosen von dem Zwischenspeicher zu nutzen. Zudem umfasst die nach dem Konzept der Erfindung ausgebildete Vorrichtung neben dem eigentlichen Zwischenspeicher (Zwischenspeichereinrichtung) der mit Dosen von der anliefernden Fördereinrichtung befüllt werden kann und von dem Dosen auf dieselbe ausliefernde Fördereinrichtung entladen werden können zwei Hilfsdosenspeicher, die bevorzugt jeweils zum Zwischenspeichern einer geringeren Dosenmenge als der Zwischenspeicher ausgelegt sind. Von diesen beiden Hilfsdosenspeichem ist ein erster Hilfsdosenspeicher vor der (einzigen) der Zwischenspeichereinrichtung zugeordneten Fördereinrichtung angeordnet und ein zweiter Hilfsdosenspeicher ist dieser Fördereinrichtung in Förderrichtung nachgeordnet. Die Fördereinrichtung verbindet dabei die beiden Hilfsdosenspeicher in einer Art Bypass, wobei dem ersten Hilfsdosenspeicher eine erste Übergabevorrichtung zugeordnet ist, mit der Dosen von dem ersten Hilfsdosenspeicher auf die Fördereinrichtung übergeben werden können. Ferner ist dem zweiten Hilfsdosenspeicher eine zweite Übergabevorrichtung zugeordnet, mit der Dosen von der Fördereinrichtung auf den zweiten Hilfsdosenspeicher übergeben werden können.

Durch das Vorsehen einer einzigen Fördereinrichtung wird die Handhabungseinrichtung lediglich dazu verwendet, Dosen von und zu der Zwischenspeichereinrichtung zu bringen. Die Funktion des Umsetzens von Dosen zwischen zwei Fördereinrichtungen, wie dies bei der EP 2 192 061 A2 der Fall, muss nicht mehr erfüllt werden. Bevorzugt steht die Handhabungseinrichtung im Normalbetrieb einfach still und die Fördereinrichtung arbeitet im Bypassbetrieb.

Die Handhabungseinrichtung kann darüber hinaus, da sie nicht wie im Stand der Technik gemäß der EP 2 192 061 A2 für laufende Umsetzungen zwischen zwei Fördereinrichtungen eingesetzt wird, auch zu besonderen Sortiermaßnahmen eingesetzt werden. So ist es beispielsweise denkbar in in der Zwischenspeichereinrichtung abgelegten Dosenreihen Dosenlücken durch Umsortierung aufzufüllen.

Mit der nach dem Konzept der Erfindung ausgebildeten Vorrichtung können alternativ Dosen unmittelbar von dem ersten Hilfsdosenspeicher über die (einzige) Fördereinrichtung zu dem zweiten Hilfsdosenspeicher, der dabei als Bypass wirkt, transportiert werden, ohne in der Zwischenspeichereinrichtung zwischengespeichert zu werden. Alternativ können gleichzeitig mehrere Dosen von der Fördereinrichtung in die Zwischenspeichereinrichtung überführt oder von der Zwischenspeichereinrichtung wieder auf die Fördereinrichtung übergeben werden. Damit gleichzeitig eine Mehrzahl von Dosen aus der Zwischenspeichereinrichtung mittels der Handhabungseinrichtung auf die Fördereinrichtung übergeben werden können, muss eine ausreichend große Dosenlücke (freie Ablageplätze) auf der Fördereinrichtung geschaffen werden, wobei dies bevorzugt mit Hilfe des ersten Hilfsdosenspeichers zusammen mit der ersten Übergabevorrichtung erfolgt, insbesondere derart, dass die erste Übergabevorrichtung gestoppt wird und die Fördereinrichtung zumindest so lange weiterläuft, bis die gewünschte Lückengröße realisiert ist. Das eigentliche Lückenschließen von, in der Regel einzelnen Dosenlücken, in einem Bereich vor der Fördereinrichtung erfolgt bevorzugt mit Hilfe der ersten Übergabevorrichtung. Insbesondere dann, wenn die Funktion des (Einzel-) Lückenschließens von der ersten Übergabevorrichtung, insbesondere einer Vakuumladetrommel übernommen wird, wird mit Vorteil erreicht, dass die Übergabegeschwindigkeit von der ersten Übergabevorrichtung auf die Fördereinrichtung von der Produktionsgeschwindigkeit einer der Fördereinrichtung und damit der ersten Übergabevorrichtung vorgeordneten Produktionsmaschine entkoppelt werden kann.

Zudem dienen die beiden Hilfsdosenspeicher zum Ausgleich kleinerer Produktionsgeschwindigkeitsunterschiede.

Insgesamt können mit der nach dem Konzept der Erfindung ausgebildeten Vorrichtung bevorzugt fünf Betriebszustände realisiert werden, die im Folgenden im Detail erläutert sind.

Mit der Vorrichtung ist es möglich, Einzellücken zu schließen, die von einer der Vorrichtung vorgelagerten (Produktions-)Maschine bzw. einem vorgelagerten Dosentransport herrühren. Diese Einzellücken werden idealerweise von der ersten Übergabevorrichtung geschlossen, da hierdurch in die Zwischenspeichereinrichtung Dosenreihen ohne Lücken eingelagert werden können, was den Betriebsablauf beim Auslagern erleichtert. Wie später noch erläutert werden wird, ist es im Falle des Vorsehens von ersten Übergabemitteln zwischen dem ersten Hilfsdosenspeicher und einer vorgelagerten Maschine theoretisch auch denkbar, Dosenlücken zusätzlich oder alternativ zur ersten Übergabevorrichtung mit den fakultativen ersten Übergabemitteln zu schließen.

Ferner ist es möglich, mit der nach dem Konzept der Erfindung ausgebildeten Vorrichtung gleichzeitig mehrere, insbesondere in einer Reihe angeordnete, Dosen von der Fördereinrichtung mittels der Handhabungseinrichtung in die Zwischenspeichereinrichtung zu überführen. Dieser Betriebszustand ist insbesondere dann notwendig, wenn eine der nach dem Konzept der Erfindung ausgebildeten Vorrichtung nachgeordnete Maschine (temporär) etwas zu langsam läuft und der erste und/oder der zweite Hilfsdosenspeicher zu voll werden/wird. In diesem Fall entnimmt die Handhabungseinrichtung (Roboter) mindestens eine Dosenreihe, vorzugsweise immer wieder einzelne Dosenreihen, von der Fördereinrichtung und lagert diese in der Zwischenspeichereinrichtung ein. Die dadurch entstehende Lücke auf der Fördereinrichtung (beispielsweise 20 Einzellücken in Folge) werden beispielsweise geschlossen, indem die zweite Übergabevorrichtung stehen bleibt, die gesamte Lücke abwartet und erst bei der ersten Dose, die auf der Fördereinrichtung bei der zweiten Übergabevorrichtung ankommt, wieder anläuft. Hierdurch werden die Hilfsdosenspeicher entlastet und das Gesamtsystem in Balance gehalten, zumindest solange, wie die Zwischenspeichereinrichtung noch aufnahmefähig ist oder die Laufhemmung der nachgeschalteten Maschine behoben wurde.

Ferner ist es möglich über einen längeren Zeitraum kontinuierlich Dosenreihen von der Fördereinrichtung in den Zwischenspeicher zu überführen. Dieser Betriebszustand wird insbesondere dann angewendet, wenn die der nach dem Konzept der Erfindung ausgebildete Vorrichtung nachgeordnete Maschine vollständig steht. Solange der Zwischenspeicher aufnahmefähig ist, können Dosen, insbesondere in Reihen, kontinuierlich, d.h. Reihe für Reihe, von der Fördereinrichtung abgenommen und in den Zwischenspeicher eingelagert werden. Sobald die nachgeordnete Maschine wieder lauffähig ist, werden die Dosen auf dem Transportband wieder bis zur zweiten Übergabevorrichtung transportiert, die bevorzugt genau bei Ankunft der ersten Dose wieder anläuft und die lückenlose Dosenreihe im zweiten Hilfsdosenspeicher aufrecht erhält.

Ein weiterer möglicher Betriebszustand einer nach dem Konzept der Erfindung ausgebildeten Vorrichtung ist das Rückführen von gleichzeitig mehreren, insbesondere in Reihe angeordneten, Dosen von der Zwischenspeichereinrichtung auf die Fördereinrichtung. Diese Funktion bzw. dieser Betriebszustand der, insbesondere kontinuierlichen, Entladung der Zwischenspeichereinrichtung erfolgt unter normalen Betriebsbedingungen, d.h. wenn die der nach dem Konzept der Erfindung ausgebildeten Vorrichtung nachgeordnete Maschine störungsfrei läuft. Hierbei ist es bevorzugt, wenn diese nachgelagerte Maschine bzw. die nachgelagerte Maschine um mindestens 10% schneller läuft als die der erfindungsgemäßen Vorrichtung vorgelagerte Maschine, so dass die Hilfsdosenspeicher langsam entleert werden. Rechtzeitig vor deren vollständiger Entleerung kann durch temporäres Stehen bleiben der ersten Übergabevorrichtung auf der Fördereinrichtung eine ausreichend große, aus mehreren Einzellücken bestehende Lücke gezogen werden, die bevorzugt von ihrer Größenbemessung exakt der Dosenreihe entspricht, die die Handhabungseinrichtung von der Zwischenspeichereinrichtung zuführt und auf der Fördereinrichtung absetzt. Dieser Vorgang findet sporadisch statt, vorzugsweise immer dann, wenn die Hilfsdosenspeicher ausreichend leer genug dazu sind.

Ein weiterer vorzugsweise realisierbarer Betriebszustand betrifft das kontinuierliche Rücklagern von jeweils gleichzeitig mehreren, vorzugsweise als Reihe angeordneten, Dosen aus der Zwischenspeichereinrichtung. Dieser Betriebszustand wird bevorzugt dann realisiert, wenn die der erfindungsgemäßen Vorrichtung vorgeschaltete Maschine nicht arbeitet und die Zwischenspeichereinrichtung, vorzugsweise mit der (Produktions-)Geschwindigkeit der der erfindungsgemäßen Vorrichtung nachgeordneten Maschine Dosenreihen einspeist. Nach Beendigung dieser Situation und erneutem Anlaufen der vorgeschalteten Maschine wird die Dosenbeschickung der Fördereinrichtung an der ersten Übergabevorrichtung wieder eingeschaltet und zwar bevorzugt derart, dass das letzte Einsetzen einer Dosenreihe aus der Zwischenspeichereinrichtung mittels der Handhabungseinrichtung lückenlos auf der Fördereinrichtung geschieht.

Besonders zweckmäßig ist eine Ausführungsvariante der Vorrichtung, bei der der erste und/oder zweite Hilfsdosenspeicher als Kettenspeicher ausgebildet sind/ist, um mit diesen eine gewisse Anzahl von Dosen auf einfache Weise zwischenspeichern zu können. Bevorzugt handelt es sich um kleine Kettenspeicher mit weniger als 10, vorzugsweise weniger als 6, noch weiter bevorzugt weniger als 3, besonders bevorzugt lediglich mit einem einzigen Laufwagen zur Variation der speicherwirksamen Kettenlänge.

Eine vollständige Entkopplung der Übergabegeschwindigkeit zur Übergabe von Dosen von dem ersten Hilfsdosenspeicher auf die Fördereinrichtung mittels der ersten Übergabevorrichtung von der Produktionsgeschwindigkeit einer dem ersten Hilfsdosenspeicher vorgeordneten Maschine bzw. einer dieser zugeordneten zuführenden Fördereinrichtung kann durch das Vorsehen von ersten Übergabemitteln, insbesondere in Form von zwei Vakuumladetrommeln erreicht werden, mit der Dosen, die von der nach dem Konzept der Erfindung ausgebildeten Vorrichtung vorgeordneten Maschine angeliefert werden auf den ersten Hilfsdosenspeicher übergeben werden können. Mit vorgenannter Weiterbildung wird der Hilfsdosenspeicher vollständig von der vorgeordneten (Produktions-) Maschine entkoppelt, wodurch es durch eine entsprechende Ansteuerung der ersten Übergabevorrichtung und/oder des Hilfsdosenspeichers möglich ist (Einzel-) Lücken mit einem Vergleich zu einem normalen Geschwindigkeitsniveau niedrigerem Geschwindigkeitsniveau zu schließen, wodurch Übergabestöße reduziert werden. Wenn beispielsweise die Produktionsgeschwindigkeit einer der aus dem Konzept der Erfindung vorgeordneten Maschine 400 Dosen/min beträgt, können Dosenlücken mittels der ersten Übergabevorrichtung beispielsweise mit nur (beherrschbaren) 200 Dosen/min temporärer Geschwindigkeit übergeben werden.

Grundsätzlich ist jedoch eine Entkopplung einer vorgeschalteten Maschine durch das Vorsehen von Übergabemitteln zum ersten Hilfsdosenspeicher nicht notwendig. Bevorzugt kommen solche Übergabemittel zum Einsatz, wenn die vorgeschalteten Maschinen keinen Kettentransporteur (Transportkette) für den Dosendurchlauf verwenden. Sie dienen insbesondere als Übergabehilfe zwischen unterschiedlichen Transportmitteln. Das gleiche gilt in analoger Weise für die zweiten Übergabemittel, auf die bei Bedarf auch verzichtet werden kann.

Besonders bevorzugt sind dem zweiten Hilfsdosenspeicher neben der zweiten Übergabevorrichtung zum Übergeben von Dosen von der Fördereinrichtung zu auf den zweiten Hilfsdosenspeicher zweite Übergabemittel zugeordnet, mit denen Dosen aus dem zweiten Hilfsdosenspeicher auf einen abführenden Förderstrang überführbar sind, um somit den zweiten Hilfsdosenspeicher und damit die Übergabegeschwindigkeit zur Übergabe von Dosen von der Fördereinrichtung mit Hilfe der zweiten Übergabevorrichtung auf den zweiten Hilfsdosenspeicher von der Geschwindigkeit des abführenden Förderstrangs zu entkoppeln.

Die ersten und/oder zweiten Übergabemittel sind nicht zwingend notwendig. Insbesondere wenn die angrenzenden Positionsmaschinen ebenfalls einen Kettentransport besitzen, kann dieser die Hilfsdosenspeicher mit beinhalten, so dass nur eine erste und/oder eine zweite Übergabevorrichtung zum Übergeben auf die Fördereinrichtung bzw. zum Entnehmen von der Fördereinrichtung notwendig sind.

Besonders geschickt ist es, wenn die gleichzeitig an- und ausliefernde, dem Zwischenspeicher zugeordnete Fördereinrichtung ein Taschenband mit einer Vielzahl von nebeneinander angeordneten Transporttaschen umfasst, in die die Dosen mittels der Handhabungseinrichtung eingelegt bzw. aus denen die Dosen mittels der Handhabungseinrichtung entnommen werden können. Bevorzugt sind die, vorzugsweise oben offenen, Transporttaschen zur Aufnahme jeweils einer einzelnen Dose ausgebildet.

Wie bereits erwähnt ist es besonders zweckmäßig, wenn die erste und/oder zweite Übergabevorrichtung als sogenannte Vakuumtrommel (Vakuum-Ladetrommel) ausgebildet sind/ist, wobei auch alternative Übergabevorrichtungen einsetzbar sind. Bevorzugt handelt es sich bei den vorgesehenen ersten und/oder zweiten Übergabemitteln jeweils um eine Kombination aus zwei solcher Vakuumtrommeln, wobei auch hier Alternativen realisierbar sind.

In Weiterbildung der Erfindung ist mit Vorteil vorgesehen, dass die, vorzugsweise (noch) unlackierten, (Metall-) Dosen nicht unmittelbar aufeinander in einem Speicherbehälter der Zwischenspeichereinrichtung platziert werden, sondern voneinander beabstandet, was auf den ersten Blick einer gewünschten Raumminimierung zuwider läuft. Hierdurch kann jedoch überraschend der wesentliche Vorteil erreicht werden, dass sich die Dosen zu keinem Zeitpunkt berühren, wodurch eine Störung des Betriebs der Produktionsanlage durch ein ansonsten wahrscheinliches Verhaken von ungebürsteten Dosen vermieden wird. Um nun bei der berührungsfreien Anordnung der Dosen den Speicherraum zu minimieren bzw. das Speichervolumen unter Ausnutzung des zur Verfügung stehenden Raumes zu optimieren, wird in Weiterbildung der Erfindung die Raumtiefe zum Zwischenspeichern der Dosen erstmals genutzt, indem in einem Tray (Ablageelement) der Zwischenspeichereinrichtung nicht nur eine Reihe von nebeneinander liegend angeordneten, sich nicht berührenden Dosen abgelegt werden, sondern stattdessen mehrere hintereinander angeordnete Reihen von Dosen. Bevorzugt ist, wenn sich nicht nur die Dosen jeder Reihe untereinander nicht berühren, sondern zusätzlich auch die Dosen von hintereinander angeordneten Reihen sich nicht berühren. Ganz besonders bevorzugt ist es, wenn in einem Tray der Zwischenspeichereinrichtung mehr als zwei Dosenreihen hintereinander abgelegt werden. Dabei wird unter vor- oder hintereinander abgelegten Reihen liegender Dosen verstanden, dass die Dosen zweier benachbarter Reihen mit ihren Stirnseiten einander zugewandt sind, wobei es bevorzugt ist, wenn die mehreren Reihen von Dosen in einer Horizontalebene hintereinander abgelegt werden, und wobei es grundsätzlich zunächst gleichgültig ist, ob eine zweite Reihe vor oder hinter die erste Reihe abgelegt wird. Bevorzugt werden die Reihen von Dosen dabei lediglich in einer einzigen Ebene abgelegt, d.h. ein Tray enthält nur in einer, vorzugsweise horizontalen, Ebene angeordnete Dosen, nicht jedoch übereinander angeordnete Dosen. Bevorzugt wird bei jedem Entnahme- bzw. Überführschritt eine Dosenreihe abgelegt und einem darauffolgenden Schritt die nächste, vorzugsweise unmittelbar benachbarte, Dosenreihe. Durch die zuvor beschriebene Maßnahme wird, wie erwähnt, zur Zwischenspeicherung also erstmals die Raumtiefe genutzt. Vor "vor"- bzw. "hintereinander" meint dabei eine Anordnung senkrecht zu den Dosenreihen Längserstreckungen.

Bevorzugt ist es, dass die Dosen in den Trays liegend abgelegt bzw. zwischengespeichert werden, wobei unter einer liegenden Ablage verstanden wird, dass die Boden- und Deckelseite, d.h. die Stirnseite der Dosen nicht parallel zu einer Horizontalebene, sondern vorzugsweise senkrecht zu dieser angeordnet sind, dass sich also die Längsachse der Dosen zumindest näherungsweise parallel zur Horizontalebene erstreckt, wobei auch Neigungswinkel der Längsachse zur Horizontalebene von kleiner als 30°, vorzugsweise kleiner als 20°, bevorzugt kleiner als 10° noch akzeptabel erscheinen.

Wie bereits ausgeführt, ist ein wesentlicher Kernbestandteil der Weiterbildung der Erfindung die jeweils in einer Reihe angeordneten Dosen voneinander beabstandet von der Fördereinrichtung zum Tray zu überführen und auch dort voneinander beabstandet abzulegen. Noch weiter bevorzugt ist es, wenn zudem auch die Dosenreihen voneinander beabstandet sind, sodass sich nicht nur die Dosen innerhalb der Reihe nicht berühren, sondern auch die Dosenreihen untereinander berührungsfrei angeordnet sind, indem zugewandten, bevorzugt parallel ausgerichteten Stirnseiten benachbarter Dosenreihen von einander beabstandet sind. Alternativ ist es denkbar, um den Raumbedarf für die Dosenspeicherung weiter zu minimieren, dass sich zwei benachbarte Reihen in einem Tray berühren derart, dass die Dosen mit ihren Stirnseiten ineinander anliegen. Auch in diesem Fall muss gewährleistet sein, dass die Mantelflächen der in Reihe angeordneten Dosen sich untereinander nicht berühren.

Zum Erzielen höchster Durchsatzgeschwindigkeiten ist es bevorzugt, wenn die Handhabungseinrichtung in Abkehr der Lehre der EP 2 192 061 A2 keine Einsteckdorn (Einschubstäbe) aufweisende Handhabungseinrichtung aufweist, sondern stattdessen mit Saugmitteln ausgestattet ist, um die Dosen an ihren Mantelflächen durch Beaufschlagung mit Unterdruck anzusaugen. Hierdurch können im Stand der Technik wahrscheinliche Taumelbewegungen beim Greifen bzw. Überführen der Dosen sicher vermieden werden.

Um eine optimale Dosenmenge bei geringem Platzbedarf im Speicher realisieren zu können bzw. um eine einfache Anpassung der Handhabungseinrichtung an unterschiedliche Dosenformate und ggf. daraus resultierende Abstände zu ermöglichen, ist es bevorzugt, wenn der Abstand der Saugmittel der Handhabungseinrichtung untereinander, vorzugsweise automatisch, beispielsweise hydraulisch, pneumatisch oder elektromotorisch einstellbar ist. So ist es beispielsweise denkbar, dass einzelne Greiffinger (Saugfinger) verschiebbar angeordnet sind.

Um den Raumbedarf zur Speicherung einer erhöhten Dosenzahl zu minimieren, ist als weitere Maßnahme in Weiterbildung der Erfindung vorgesehen, dass in Abkehr von der EP 2 192 061 A2 nicht ein Hochregallager oder ein Paternosterlager als Zwischenspeichereinrichtung zum Einsatz kommt (was alternativ möglich ist und im Rahmen der Erfindung liegt), sondern dass die Zwischenspeichereinrichtung als Stapelspeichereinrichtung ausgebildet ist, die dazu ausgelegt und bestimmt ist, mit mehreren Dosenreihen gefüllte Trays unmittelbar aufeinander zu stapeln, d.h. einen Traystapel aus mehreren übereinander angeordneten, sich unmittelbar kontaktierenden Trays in der Art eines Palettenstapels herzustellen. Im Gegensatz zum Stand der Technik berühren sich somit die benachbarten Speicherbehälter unmittelbar, wodurch das Raumvolumen minimiert wird. Die Trays sind bevorzugt so gestaltet, dass sie sicher aufeinander gestapelt werden können, um die einer gepackten Palette ähnliche Geometrie zu erreichen. Darüber hinaus kann die Stapelspeichereinrichtung derart ausgebildet werden, dass ein fertiger Traystapel auf einer Seite von der Stapelspeichereinrichtung entnommen werden kann und auf der anderen, vorzugsweise gegenüberliegenden, Seite ein Traystapel wieder zugeführt werden kann. Hierdurch lassen sich weitere Logistiken mit großen Speicherkapazitäten realisieren. Grundsätzlich ist es sogar möglich, den Dosenpress- bzw. Tiefziehvorgang vollständig vom späteren Lackiervorgang zu trennen, wodurch eine deutliche Verbesserung bei der Effizienz der Dosenproduktionsanlage zu erzielen ist, da die Pressen, insbesondere Tiefzieheinrichtungen, prinzipiell langsam aber kontinuierlich arbeiten, während die Bedruckung mit hohen Durchsatzleistungen arbeitet, jedoch umrüstbedingte Unterbrechungen notwendig sind.

Grundsätzlich kann die Stapelspeichereinrichtung nach zwei unterschiedlichen Prinzipien arbeitend ausgebildet werden. Gemäß einer ersten Alternative arbeitet die Stapelspeichereinrichtung nach dem Umlaufprinzip. In diesem Fall kann in der Stapelspeichereinrichtung selbst der Speicherplatz optimiert werden. Beim Umlaufprinzip erfolgt nicht nur im Wirkbereich der Handhabungseinrichtung ein Umsetzen von einem auf einen zweiten Stapel, sondern auch in einem dazu beabstandeten, vorzugsweise parallelen, insbesondere oberen, Bereich, so dass zwei "miteinander kommunizierende" Stapel immer gleicher Höhe erhalten werden. Bei einer zweiten Alternative arbeitet die Stapelspeichereinrichtung nach dem Pendelprinzip, wobei hier in einem ersten Stapel ausschließlich leere Trays und in einem zweiten Stapel ausschließlich mit Dosen gefüllte Trays vorgesehen sind und die Stapelhöhen insgesamt variieren.

Die unterschiedlichen Prinzipien unterscheiden sich also dadurch, dass beim Pendelprinzip lediglich eine Stapelseite zur Dosenspeicherung benutzt wird, beispielsweise links leer, rechts voll, während beim Umlaufprinzip bei gleichem Rauminhalt doppelt so viele mit Dosen gefüllte Trays untergebracht werden können.

Besonders zweckmäßig ist es, wenn die Trays der Zwischenspeichereinrichtung mehrere, vorzugsweise unterbrechungsfreie, Ablagespalten aufweisen, die sich senkrecht zur Längserstreckung der Dosenreihen erstrecken und wobei von jeder Dosenreihe bevorzugt in jeder Ablagespalte eine einzige Dose vorhanden ist. Innerhalb der Ablagespalten sind Dosen benachbarter Reihen mit ihren Stirnseiten einander zugewandt. Dadurch, dass nun die Ablagespalten senkrecht zur Längserstreckung der Dosenreihe durchgängig, d.h. ohne Unterbrechungen, d.h. abteilungsfrei, ausgebildet sind, ist es theoretisch denkbar, die Dosen entlang der Ablagespalten zu verschieben. Hierdurch sind die Trays dosenformatunabhängig und es können mit demselben Tray unterschiedliche Dosenlängen gespeichert werden. Ganz besonders bevorzugt haben die Ablagespalten im Querschnitt eine Prismenform, so dass jede Dose an zwei parallel zu ihrer jeweiligen Längserstreckung orientierten Linien jeweils eine Schrägfläche eines prismenförmigen Ablagespaltes berühren. Gleichzeitig wird durch diese Form eine berührungsfreie Lagerung der Dosen im Rohzustand (vorzugsweise gewaschen und gebürstet, nicht lackiert) sichergestellt. Die Länge jeder Ablagespalte ist so gestaltet, dass mehrere, vorzugsweise mehr als zwei sich senkrecht zur Längserstreckung der Ablagespalten erstreckende Dosenreihen, parallel zueinander hintereinander gelegt werden können.

Die Erfindung führt auch auf ein Verfahren zum Zwischenspeichern von, vorzugsweise unlackierten, insbesondere aus Metall bestehenden, Dosen, vorzugsweise unter Verwendung einer nach dem Konzept der Erfindung ausgebildeten, zuvor im Detail beschriebenen Vorrichtung. Kern des Verfahrens ist es, dass mittels der Handhabungseinrichtung bei Bedarf Dosen von der Fördereinrichtung entnommen und in die Zwischenspeichereinrichtung überführt werden und mittels derselben Handhabungseinrichtung bei Bedarf auf dieselbe Fördereinrichtung Dosen von der Zwischenspeichereinrichtung (zurück) überführt werden. Ferner werden Dosen mittels der ersten Übergabevorrichtung von dem ersten der Fördereinrichtung vorgeordneten Hilfsdosenspeicher auf die Fördereinrichtung überführt und mittels der zweiten Übergabevorrichtung von der Fördereinrichtung in den zweiten, der Fördereinrichtung nachgeordneten Hilfsdosenspeicher.

In Weiterbildung der Erfindung ist mit Vorteil vorgesehen, dass die Vorrichtung neben der ersten Übergabevorrichtung erste Übergabemittel zum Übergeben von Dosen von einem, insbesondere einer (Produktions-)Maschine zugeordneten, zuführenden Förderstrang in den ersten Hilfsdosenspeicher aufweist und dass das Schließen von (Einzel-)Dosenlücken mit der ersten Übergabevorrichtung beim Überführen von Dosen aus dem ersten Hilfsdosenspeicher in die Fördereinrichtung erfolgt. Bevorzugt erfolgt das (Einzel-)Dosen*schließen nicht mit den ersten Übergabemitteln, die den ersten Hilfsdosenspeicher von dem zuführenden Förderstrang und damit einer der nach dem Konzept der Erfindung ausgebildeten Vorrichtung vorgeordneten Maschine entkoppelt.

Bevorzugt wird zum Füllen der (Einzel-)Dosenlücken die Fördereinrichtung mit einer im Vergleich zu einer Normalgeschwindigkeit reduzierten Geschwindigkeit, von vorzugsweise größer 0m/s betrieben und eine Dosenlücke im ersten Hilfsdosenspeicher an einer Übergabeposition mittels der ersten Übergabevorrichtung vorbeigeführt und eine auf die Dosenlücke folgende Dose mittels der ersten Übergabevorrichtung mit einer im Vergleich zur Normalgeschwindigkeit reduzierten Geschwindigkeit, insbesondere einer reduzierten Übertragungsgeschwindigkeit und/oder Rotationsgeschwindigkeit der ersten Übergabevorrichtung auf die Fördereinrichtung überführt, woraufhin die Geschwindigkeit der Fördereinrichtung, vorzugsweise auf Normalgeschwindigkeit, und die Geschwindigkeit der ersten Übergabevorrichtung wieder erhöht wird.

Durch die zuvor beschriebenen Maßnahmen können extrem hohe Dosenzykluszahlen in einer Produktionsanlage realisiert werden, da die Fördereinrichtung nicht angehalten werden muss und daher verminderte Beschleunigungen auftreten. Insbesondere dann, wenn vergleichsweise niedrige Dosenzykluszahlen realisiert werden sollen, ist es alternativ auch denkbar die Fördereinrichtung anzuhalten, um eine Lücke abzuwarten.

Besonders zweckmäßig ist es, wenn zum Füllen von (Einzel-)Dosenlücken die erste Übergabevorrichtung kurzfristig mit einer niedrigeren Geschwindigkeit, insbesondere einer niedrigeren Übergabegeschwindigkeit und/oder Rotationsgeschwindigkeit, betrieben wird als die ersten Übergabemittel, um Stöße zu vermeiden.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine schematische Darstellung einer bevorzugten Ausführungsform einer Zwischenspeichervorrichtung, wobei aus Übersichtlichkeitsgründen auf die Darstellung der zugehörigen Zwischenspeichereinrichtung, insbesondere einer Stapelspeichereinrichtung verzichtet wurde,
- Fig. 2:: einen Stapel aus mehreren übereinander gestapelten, jeweils mit mehreren Dosenreihen gefüllten Trays,
- Fig. 3:: eine Draufsicht auf ein gefülltes Tray mit insgesamt vier hintereinander angeordneten Dosenreihen,
- Fig. 4:: in einer schematischen Darstellung den Fahrweg der Handhabungseinrichtung zum Überführen von Dosen von der (einzigen) Fördereinrichtung in die Zwischenspeichereinrichtung,
- Fig. 5:: in einer schematischen Darstellung eine Ansicht der Handhabungseinrichtung mit Sauggreifern,
- Fig. 6:: eine schematische Darstellung einer nach dem Pendelprinzip arbeitenden Stapelspeichereinrichtung,
- Fig. 7:: eine schematische Darstellung einer nach dem Umlaufprinzip arbeitenden Stapelspeichereinrichtung, und
- Fig. 8:: eine Darstellung eines Kettenspeichers nach dem Stand der Technik.

In den Figuren sind gleiche Elemente und Elemente mit der gleichen Funktion mit den gleichen Bezugszeichen gekennzeichnet.

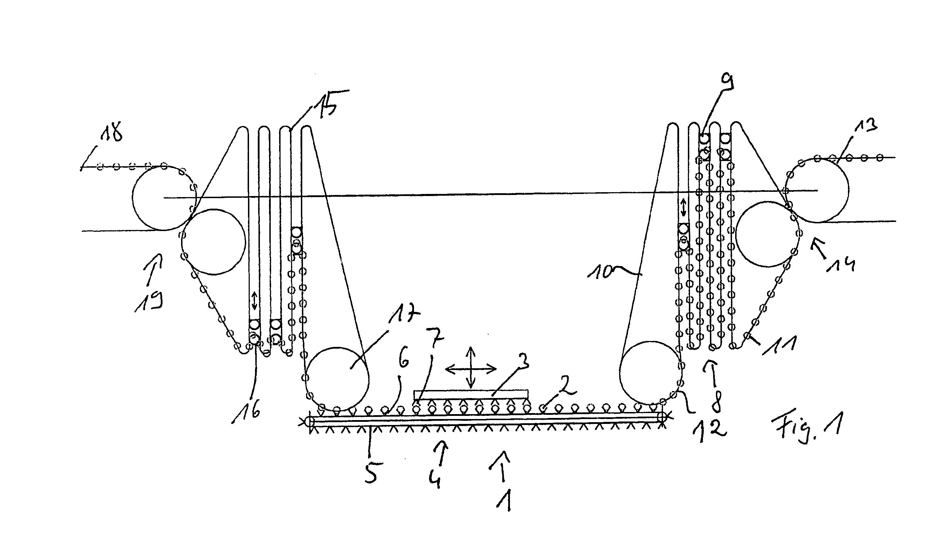

In Fig. 1 ist eine Vorrichtung 1 zum Zwischenspeichern von unlackierten Dosen 11 aus Metall gezeigt. Die Vorrichtung 1 umfasst eine anliefernde Fördereinrichtung 2, mit der Dosen zu einer Handhabungseinrichtung 3 transportiert werden, mit der gleichzeitig mehrere Dosen voneinander beabstandet in eine aus Übersichtlichkeitsgründen nicht dargestellte Zwischenspeichereinrichtung überführt werden können. Mit derselben Handhabungseinrichtung 3 können mehrere Dosen berührungsfrei von der Zwischenspeichereinrichtung wieder auf dieselbe Fördereinrichtung 2 zum Zwecke der Auslieferung überführt werden. Die Fördereinrichtung 2 bietet also einen Übergabebereich 4, in welchem die Handhabungseinrichtung zum Entnehmen und Beladen mit der Fördereinrichtung 2 bzw. den darauf angeordneten Dosen bzw. Dosenlücken in Wechselwirkung treten kann.

Um mittels der Handhabungseinrichtung 3 (Handhabungsroboter) gleichzeitig eine Anzahl von Dosen in einem voneinander beabstandeten Zustand von der Fördereinrichtung 2, die in dem gezeigten Ausführungsbeispiel als Taschenband 5 mit einer Anzahl von voneinander beabstandeten Taschen 6 ausgebildet ist, entnehmen zu können, ist die Handhabungseinrichtung 3 mit einer Anzahl von Saugmitteln 7 ausgestattet, mit welchen die Dosen im Bereich ihrer Mantelfläche angesaugt werden können. Bevorzugt ist der Abstand (in Längserstreckung der Fördereinrichtung) der Saugmittel 7 untereinander automatisch einstellbar.

Wie sich aus Fig. 1 weiter ergibt, ist der Fördereinrichtung 2 in Förderrichtung ein erster, als Kettenspeicher ausgebildeter Hilfsdosenspeicher 8 vorgeordnet, der in dem gezeigten Ausführungsbeispiel insgesamt drei erste Laufwagen 9 zur Einstellung der speicherwirksamen Kettenlänge aufweist. Der als Kettenspeicher ausgebildete erste Hilfsdosenspeicher 8 umfasst eine umlaufend angetriebene Transportkette 10 mit daran angeordneten Kettenstiften (nicht dargestellt) zur Aufnahme jeweils einer Dose 11.

Dem ersten Hilfsdosenspeicher 8 ist eine erste in dem gezeigten Ausführungsbeispiel als Vakuumladetrommel ausgebildete erste Übergabevorrichtung 12 zugeordnet, mit welcher Dosen 11 vom ersten Hilfsdosenspeicher 8 auf die Fördereinrichtung 2 übergeben werden können.

Zur (nicht notwendigen, jedoch vorteilhaften) Entkopplung des ersten Hilfsdosenspeichers 8 von einem zuführenden, vorzugsweise einer nicht dargestellten Produktionsmaschine zugeordneten, Förderstrang 13 auf den ersten Hilfsdosenspeicher 8 sind erste Übergabemittel 14 zugeordnet, die in dem gezeigten Ausführungsbeispiel zwei miteinander in an sich bekannter Weise in Wechselwirkung tretende Vakuumtrommeln aufweisen.

In Förderrichtung ist der Fördereinrichtung 2 ein zweiter ebenfalls als Kettenspeicher ausgebildeter Hilfsdosenspeicher 15 mit ebenfalls insgesamt drei zweiten Laufwagen 16 zugeordnet. Zur Übergabe von Dosen von der Fördereinrichtung 2 auf den zweiten Hilfsdosenspeicher 15 ist eine zweite als Vakuumladetrommel ausgebildete Übergabevorrichtung 17 vorgesehen. Zur Entkopplung des zweiten Hilfsdosenspeichers 15 von einer abführenden Fördereinrichtung 18 sind zweite Übergabemittel 19 in der Form von zwei miteinander in Wechselwirkung tretenden Vakuumladetrommeln vorgesehen.

Im Normalbetrieb arbeitet die Fördereinrichtung 2 als Bypass, d.h. kann ohne in Wechselwirkung mit der Fördereinrichtung 2 treten zu müssen Dosen unmittelbar von der ersten Übergabevorrichtung 12 zur zweiten Übergabevorrichtung 17 transportieren. Werden über den Förderstrang 13 mehr Dosen 11 zugeführt als über den abführenden Förderstrang 18 abtransportiert werden können, so können Dosen 11 mittels der Handhabungsvorrichtung 3 von der Fördereinrichtung 2 übernommen und in eine nicht dargestellte Zwischenspeichereinrichtung, insbesondere eine Stapelspeichereinrichtung überführt werden. Um Dosen 11 wieder in den Produktionszyklus aus der Zwischenspeichereinrichtung einspeisen zu können, wird durch entsprechende Ansteuerung des ersten Hilfsdosenspeichers 8 mit zugehöriger erster Übergabevorrichtung 12 eine der zu überführenden Anzahl von Dosen entsprechende Dosenlücke auf der Fördereinrichtung 2 erzeugt, in die dann Dosen aus der Zwischenspeichereinrichtung mittels der Handhabungseinrichtung 3 überführt werden können. Konkret wird die erste Übergabevorrichtung 12 gestoppt, um eine entsprechende Dosenlücke auf der Fördereinrichtung 2 zu erzeugen, wobei hierzu die Fördereinrichtung entsprechend bei gestoppter erste Übergabevorrichtung 12 weiterlaufen muss. Die in der Zwischenzeit anfallende Dosenmenge, die von einer dem ersten Hilfsdosenspeicher vorgelagerten Maschine zugeführt wird, wird im ersten Hilfsdosenspeicher 8 aufgefangen. Alternativ kann insbesondere beim Anlegen zur Produktion von mehr als 250 Dosen/min die Geschwindigkeit der Fördereinrichtung lediglich auf über 0m/s reduziert werden, wobei zur Übergabe dann die Geschwindigkeit der ersten Übergabevorrichtung entsprechend anzupassen ist.

Die Funktion des sogenannten (Einzel-)Lückenschließens wird bevorzugt von der ersten Übergabevorrichtung 12 übernommen, d.h. wird nicht mittels der ersten Übergabemittel 14 realisiert. Dies ist mit dem besonderen Vorteil verbunden, dass die Übergabefunktion von der ersten Übergabevorrichtung 12 auf die Fördereinrichtung 2 nicht von der vorgelagerten Produktionsgeschwindigkeit und damit von der Fördergeschwindigkeit der zuführenden Fördereinrichtung 13 abhängig ist, da der erste Hilfsdosenspeicher 8 die Produktionsgeschwindigkeit von der Übergabegeschwindigkeit der ersten Übergabevorrichtung 12 entkoppelt. Hierdurch können einzelne Lücken bevorzugt mit einem niedrigerem Geschwindigkeitsniveau gefüllt werden im Vergleich zu einer normalen Übergabegeschwindigkeit, was Übergabestöße reduziert. Insbesondere wenn die vorgenannte Geschwindigkeitsreduzierung nur für einen kurzen Zeitraum, von vorzugsweise weniger als einer Sekunde wirkt, wird das Gesamtniveau der Produktionsgeschwindigkeit durch das Übergeben der Dosen bzw. das Schließen von Einzellücken nicht merkbar beeinflusst.

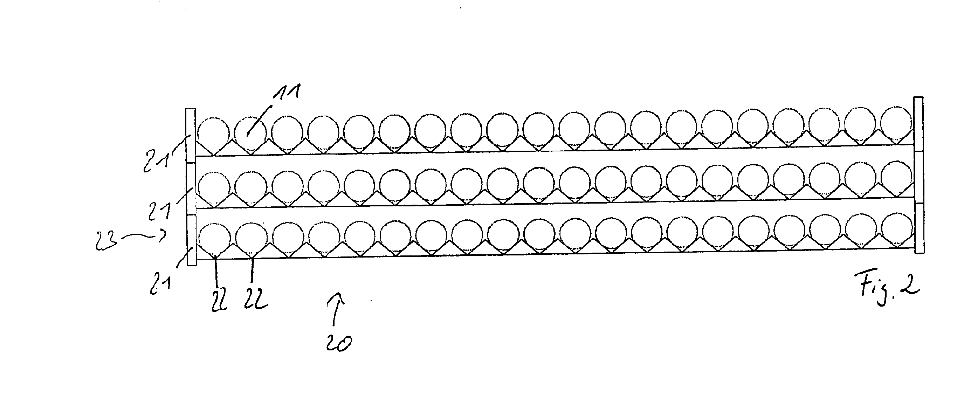

In Fig. 2 ist ein Traystapel 20 der als Stapelspeichereinrichtung ausgebildeten Zwischenspeichereinrichtung gezeigt, bzw. ein mittels der Zwischenspeichereinrichtung hergestellter Traystapel 20, in Fig. 2 umfassend drei unmittelbar aufeinander gestapelter Trays 21, die formschlüssig ineinander greifen.

Wie sich aus Fig. 2, die eine Seitenansicht des Traystapels 20 zeigt, ergibt, weist jedes Tray 21 eine Anzahl von Ablagespalten 22 auf, welche prismenförmig konturiert sind. Zu erkennen ist jeweils eine vordere Reihe 23 von Dosen, wobei sich unmittelbar hinter jeder Dosenreihe 23 mehrere weitere Dosenreihen befinden, jeweils in derselben Horizontalebene wie die vordere Reihe 23.

Die Ablagespalten 22 erstrecken sich senkrecht zur Längserstreckung der Reihen 23 von Dosen 11 in die Zeichnungsebene hinein und sind durchgängig, d.h. unterbrechungs- bzw. trennmittelfrei ausgestaltet, sodass ein und dasselbe Tray 21 für unterschiedliche Dosenformate insbesondere Dosendurchmesser und Dosenlänge einsetzbar ist.

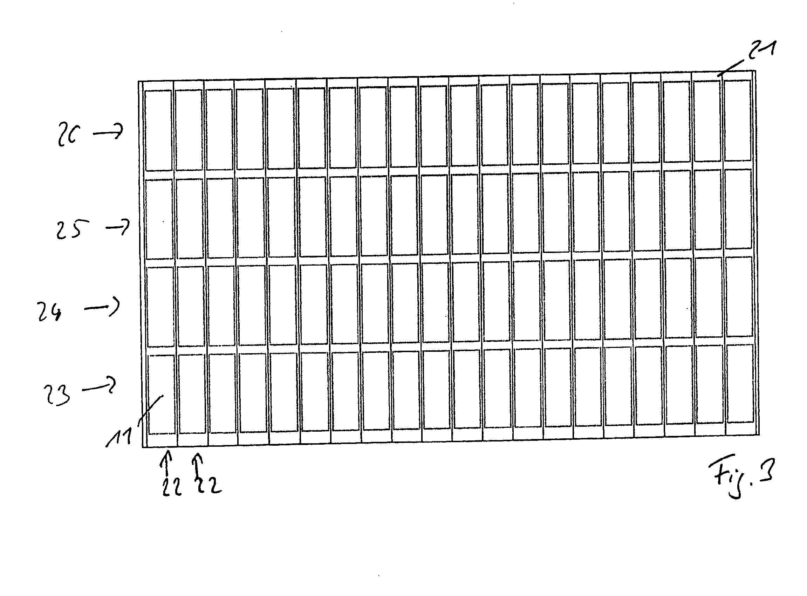

Fig. 3 zeigt eine Draufsicht auf ein vollständig gefülltes Tray. Zu erkennen sind die sich senkrecht zu den Dosenreihen erstreckenden Ablagespalten 22. Im gezeigten Ausführungsbeispiel liegen voneinander beabstandet in jedem Ablagespalt 22 vier Dosen, wobei jeder Dose in einem Ablagespalt 22 eine Reihe 23, 24, 25, 26 von Dosen zugeordnet ist.

Beim Auffüllen der Trays 21 wird bevorzugt zunächst eine erste Reihe 23 von Dosen 11 abgelegt, woraufhin in der Horizontalebene hinter der ersten Reihe 23 eine zweite Reihe 24, dann eine dritte Reihe 25 und eine vierte Reihe 26 abgelegt werden. Mindestvoraussetzung ist das Vorsehen von zwei, insbesondere parallelen Reihen, vorzugsweise von mehr als zwei parallelen Reihen zur Ausnutzung der Raumtiefe.

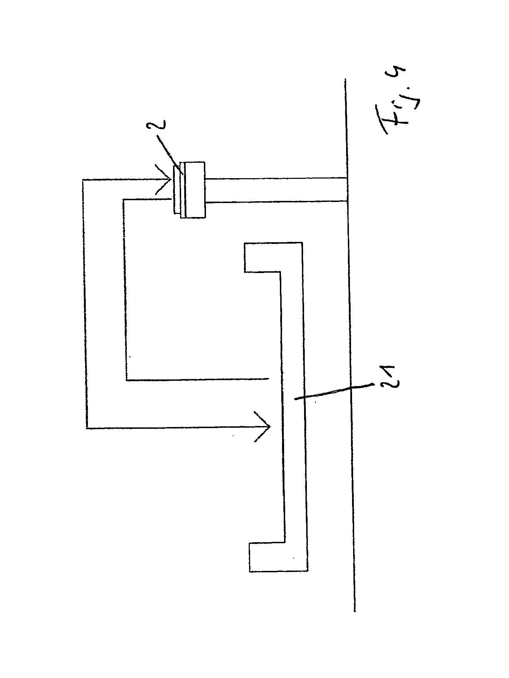

In Fig. 4 ist ein Entnahme-, Überführ- und Traybeladezyklus der Handhabungseinrichtung gezeigt. Dosen 11 können von der Fördereinrichtung 2 mittels der Handhabungseinrichtung 3 übernommen und zu Reihen in einem Tray 21 abgelegt werden. Ebenso ist es möglich eine Reihe von Dosen wieder aus dem Tray 21 zu entnehmen und eine entsprechend große Lücke der Fördereinrichtung 2 zu überführen.

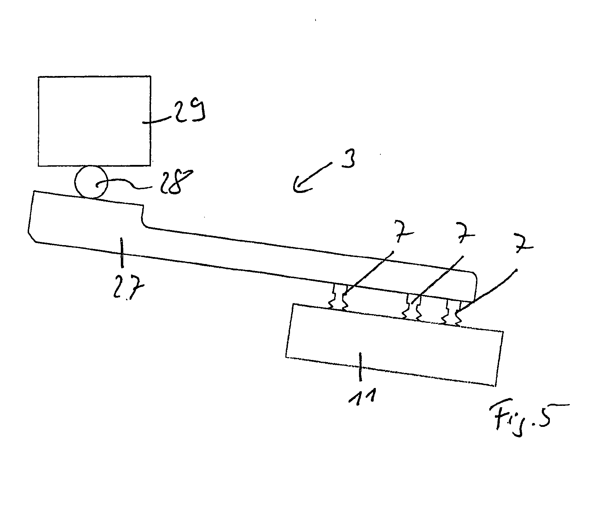

Fig. 5 zeigt schematisch eine Handhabungseinrichtung 3, wobei in dem gezeigten Ausführungsbeispiel jeder Dose 11 mehrere Saugmittel 7 zugeordnet sind, um die Dose 11 in unterschiedlichen Bereichen ihrer Mantelfläche ansaugen zu können.

Die Handhabungseinrichtung 3 umfasst einen Schwenkarm 27, der über ein Schwenkgelenk 28 mit einem horizontal und vertikal verfahrbarem Träger 29 verbunden ist.

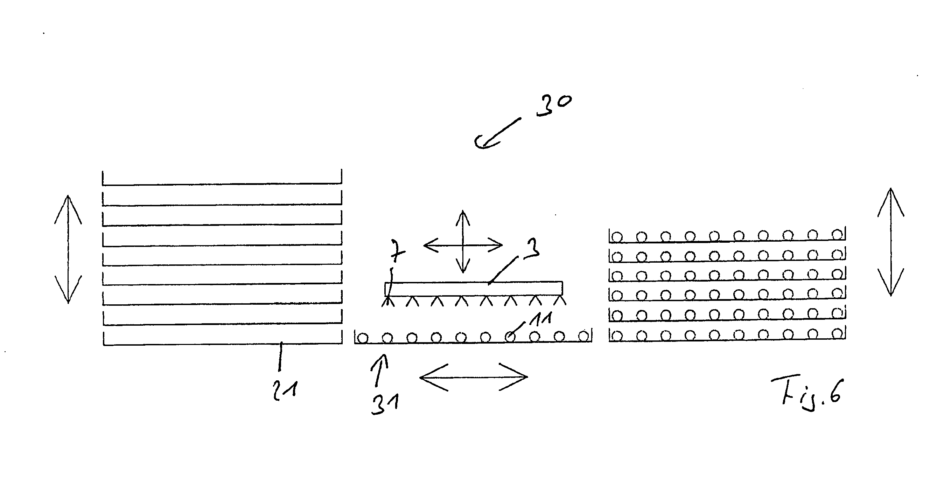

Fig. 6 zeigt eine Möglichkeit zur Ausbildung einer als Stapelspeichereinrichtung ausgebildeten Zwischenspeichereinrichtung 30. In dem gezeigten Ausführungsbeispiel arbeitet diese nach dem sogenannten Pendelprinzip, wobei in einem in der linken Zeichnungshälfte befindlichen ersten Stapel mehrere leere Trays unmittelbar aufeinander gestapelt sind. Von diesem in der linken Zeichnungshälfte befindlichen Stapel wird jeweils das unterste leere Tray 21 entnommen und an eine, hier mittlere, Be- und Entladeposition 31 überführt, in der eine Handhabungseinrichtung 3 mit Saugmitteln 7 in Wechselwirkung treten kann, um den Tray 21 zu Be- oder Entladen. Die unterschiedlichen Dosen zugeordneten Saugmittel 7 sind in ihrem Abstand zueinander automatisch einstellbar.

Nachdem in das Tray 21 in der Be- und Entladeposition 31 mehrere Reihen von Dosen 11 in einer Horizontalebene hintereinander abgelegt wurden und das Tray 21 gefüllt ist, wird dieses zudem in der Zeichnungsebene rechts befindlichen Stapel geführt und von unten in den dortigen Stapel ergänzt. In der Zeichnungsebene links können bei Bedarf mittels geeigneter Vorrichtungen, wie einem Stapler oder einem entsprechenden Roboter, leere Trays 21 nachgefüllt und in der Zeichnungsebene rechts gestapelte Trays entnommen werden. Es ist auch denkbar, die Zwischenspeichereinrichtung 30 in der gezeigten Form zu nutzen, wenn die Anzahl der pendelnd hin und her verschobenen Trays 21 ausreichend groß ist. Bei Fig. 6 ist der Vollständigkeit halber noch zu erwähnen, dass im umgekehrten Fall, bei der Entleerung die Trays 21 von der Zeichnungsebene rechts bzw. von der Be- und Entladeposition 31 nach dem Entladen von unten in den in der Zeichnungsebene linken Stapel ergänzt werden.

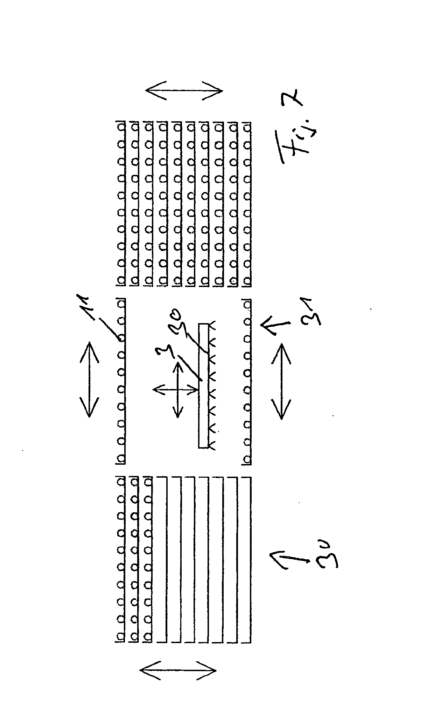

In Fig. 7 ist eine alternative Ausführungsvariante einer Zwischenspeichereinrichtung 30 gezeigt. Diese, als Stapelspeichereinrichtung ausgebildete Zwischenspeichereinrichtung 30, arbeitet nach dem umlaufenden Prinzip, bei welchem zwei Traystapel immer die gleiche Höhe aufweisen und für jedes dem rechten Stapel zugeführte Tray oben ein Tray entnommen und von oben auf den in der Zeichnungsebene linken Traystapel aufgesetzt wird. Bei einer umlaufend arbeitenden Stapelspeichereinrichtung kann bei gleichem Gesamtvolumen die doppelte Dosenmenge gespeichert werden als bei einer nach dem Pendelprinzip arbeitenden Stapelspeichereinrichtung.

### Bezugszeichenliste

- 1: Vorrichtung
- 2: Fördereinrichtung
- 3: Handhabungseinrichtung
- 4: Übergabebereich
- 5: Taschenband
- 6: Taschen
- 7: Saugmittel
- 8: erster Hilfsdosenspeicher
- 9: Laufwagen
- 10: Transportkette
- 11: Dose
- 12: Erste Übergabevorrichtung
- 13: Förderstrang
- 14: erste Übergabemittel
- 15: zweiter Hilfsdosenspeicher
- 16: Laufwagen
- 17: Zweite Übergabevorrichtung
- 18: Abführende Fördereinrichtung
- 19: Zweite Übergabemittel
- 20: Traystapel
- 21: Trays
- 22: Ablagespalten
- 23: Reihe
- 24: Reihe
- 25: Reihe
- 26: Reihe
- 27: Schwenkarm
- 28: Schwenkgelenk
- 29: Träger
- 30: Zwischenspeichereinrichtung
- 31: Be- und Entladeposition
- 100: Kettenspeicher
- 101: Transportkette
- 102: Ladetrommel
- 103: Ladetrommel
- 104: Laufwagen
- 105: Transportkette
- 106: Ladetrommel
- 107: Ladetrommel

## Patentansprüche

1. Vorrichtung (1) zum Zwischenspeichern von, vorzugsweise unlackierten, Dosen (11)
• mit einer anliefernden Fördereinrichtung (2),
• mit einer Zwischenspeichereinrichtung (30) und
• mit einer Handhabungseinrichtung (3), die zum gleichzeitigen Überführen mehrerer Dosen (11) von der Fördereinrichtung (2) in die Zwischenspeichereinrichtung (30) ausgebildet und angesteuert ist,
• wobei die anliefernde Fördereinrichtung (2) gleichzeitig auch eine ausliefernde Fördereinrichtung ist, und
• wobei die Handhabungseinrichtung (3) ausgebildet und angesteuert ist, um gleichzeitig mehrere Dosen (11) von der Zwischenspeichereinrichtung (30) auf die Fördereinrichtung (2) zu überführen,
wobei
• der Fördereinrichtung (2) ein erster Hilfsdosenspeicher (8) sowie eine erste Übergabevorrichtung (12) vorgeordnet ist, mittels der Dosen (11) auf die Fördereinrichtung (2) überführbar sind, und wobei
• der Fördereinrichtung (2) ein zweiter Hilfsdosenspeicher (15) sowie eine zweite Übergabevorrichtung (17) nachgeordnet ist, mittels der Dosen (11) von der Fördereinrichtung (2) in den zweiten Hilfsdosenspeicher (15) überführbar sind.

2. Vorrichtung nach Anspruch 1,
**dadurch gekennzeichnet, dass** der erste Hilfsdosenspeicher (8) und/oder der zweite Hilfsdosenspeicher (15) als Kettenspeicher (100) ausgebildet sind/ist, vorzugsweise mit weniger als zehn, bevorzugt weniger als sechs, noch weiter bevorzugt weniger als drei, besonders bevorzugt mit einem einzigen Laufwagen (104) zur Variation der speicherwirksamen Kettenlänge.

3. Vorrichtung nach einem der Ansprüche 1 oder 2,
**dadurch gekennzeichnet, dass** dem ersten Hilfsdosenspeicher (8) erste Übergabemittel (14) zugeordnet sind, mit denen Dosen (11) von einem zuführenden Förderstrang (13) in den ersten Hilfsdosenspeicher (8) überführbar sind und/oder dass dem zweiten Hilfsdosenspeicher (15) zweite Übergabemittel (19) zugeordnet sind, mit denen Dosen (11) aus dem zweiten Hilfsdosenspeicher (15) einem abführenden Förderstrang (13) überführbar sind.

4. Vorrichtung nach einem der vorhergehenden Ansprüche,
**dadurch gekennzeichnet, dass** die Fördereinrichtung (2) als Taschenband (5) mit einer Vielzahl von nebeneinander angeordneten Transporttaschen (6), vorzugsweise zur jeweiligen Aufnahme einer einzelnen Dose (11) ausgebildet ist.

5. Vorrichtung nach einem der vorhergehenden Ansprüche,
**dadurch gekennzeichnet, dass** die erste und/oder die zweite Übergabevorrichtung (12, 17) als Vakuumtrommel ausgebildet sind/ist.

6. Vorrichtung nach einem der vorhergehenden Ansprüche,
**dadurch gekennzeichnet, dass** mit dieser in einem ersten Schritt mehrere Dosen (11) voneinander beabstandet von der Fördereinrichtung (2) entnehmbar, voneinander beabstandet zu einem Tray (21) der Zwischenspeichereinrichtung (30) überführbar und auf dieses voneinander beabstandet liegend in einer ersten Reihe (23) ablegbar sind, und
dass die Handhabungseinrichtung (3) ausgebildet und angesteuert ist, um in einem zweiten Schritt weitere Dosen (11) voneinander beabstandet von der Fördereinrichtung (2) entnehmbar und voneinander beabstandet zu demselben Tray (21) der Zwischenspeichereinrichtung (30) überführbar und auf dieses voneinander beabstandet liegend in einer zu ersten Reihe (23) parallelen, vor oder hinter der ersten Reihe (23) angeordneten zweiten Reihe (24) ablegbar sind.

7. Vorrichtung nach Anspruch 6,
**dadurch gekennzeichnet, dass** die Handhabungseinrichtung (3) derart ausgebildet und angesteuert ist, dass die Reihen von Dosen (11) auf dem Tray (21) der Zwischenspeichereinrichtung (30) voneinander beabstandet abgelegt werden oder derart, dass sich zwei benachbarte Reihen von Dosen (11) ausschließlich mit den Dosenstirnseiten berühren.

8. Vorrichtung nach einem der vorhergehenden Ansprüche,
**dadurch gekennzeichnet, dass** die Handhabungseinrichtung (3) Saugmittel (7) zum Festhalten der Dosen (11), insbesondere an deren, vorzugsweise unbedruckten, Mantelflächen aufweist.

9. Vorrichtung nach einem der vorhergehenden Ansprüche,
**dadurch gekennzeichnet, dass** die Zwischenspeichereinrichtung (30) als Stapelspeichereinrichtung ausgebildet ist, die vorzugsweise zur Ausbildung des TrayStapels (20) die Trays (21) von unten in den Tray-Stapel (20) einfügend ausgebildet ist.

10. Vorrichtung nach einem der Ansprüche 5 bis 9,
**dadurch gekennzeichnet, dass** die Trays (21) mehrere nebeneinander angeordnete und zueinander parallele Ablagespalten (22) aufweisen, die ein Berühren von in einer sich senkrecht zu den Ablagespalten (22) erstreckenden Reihe abgelegten Dosen (11) verhindernd ausgebildet sind, und dass die Ablagespalten (22) in Richtung ihrer Längserstreckung durchgängig ausgebildet sind, derart, dass eine Dose (11) entlang der Längserstreckung jeder Ablagespalte (22) in dieser verschiebbar ist.

11. Vorrichtung nach einem der Ansprüche 5 bis 10,
**dadurch gekennzeichnet, dass** sämtliche Dosen (11) auf dem Tray (21) in einer gemeinsamen Horizontalebene ablegbar sind.

12. Vorrichtung nach einem der Ansprüche 5 bis 11,
**dadurch gekennzeichnet, dass** die Handhabungseinrichtung (3) ausgebildet und angesteuert ist, um mehrere Dosen (11) voneinander beabstandet von einem Tray (21) der Zwischenspeichereinrichtung (30) zu entnehmen und voneinander beabstandet zu der Fördereinrichtung (2) zu überführen und auf diese voneinander beabstandet zu überführen.

13. Verfahren zum Zwischenspeichern von, vorzugsweise unlackierten, Dosen (11), vorzugsweise unter Verwendung einer Vorrichtung (1) zum Zwischenspeichen von Dosen (11) nach einem der vorhergehenden Ansprüche,
wobei zum Auffüllen eines Zwischenspeichers gleichzeitig mehrere Dosen (11) von einer anliefernden Fördereinrichtung (2) mit einer Handhabungseinrichtung (3) in eine Zwischenspeichereinrichtung (30) überführt werden,
wobei die anliefernde Fördereinrichtung (2) gleichzeitig auch eine ausliefernde Fördereinrichtung (2) ist, und wobei zum Leeren der Zwischenspeichereinrichtung (30) mittels der Handhabungseinrichtung (3) gleichzeitig mehrere Dosen (11) aus der Zwischenspeichereinrichtung (30) auf diese Fördereinrichtung (2) überführt werden, wobei
der Fördereinrichtung (2) ein erster Hilfsdosenspeicher (8) in welchem Dosen (11) gespeichert werden sowie eine erste Übergabevorrichtung (12) vorgeordnet sind, mittels der Dosen (11) auf die Fördereinrichtung (2) überführt werden, und wobei der Fördereinrichtung (2) ein zweiter Hilfsdosenspeicher (15) in welchem Dosen (11) gespeichert werden sowie eine zweite Übergabevorrichtung (17) nachgeordnet sind, mittels der Dosen (11) von der Fördereinrichtung (2) in den zweiten Hilfsdosenspeicher (15) überführt werden.

14. Verfahren nach Anspruch 13,
**dadurch gekennzeichnet, dass** das Füllen von Dosenlücken mit der ersten Übergabevorrichtung (12) durchgeführt wird und vorzugsweise nicht mit den ersten Übergabemitteln (14).

15. Verfahren nach Anspruch 14,
**dadurch gekennzeichnet, dass** zum Füllen der Dosenlücken die Fördereinrichtung (2) mit einer im Vergleich zu einer Normalgeschwindigkeit reduzierten Geschwindigkeit, von vorzugsweise größer null m/s, betrieben wird und eine Dosenlücke im ersten Hilfsdosenspeicher (8) an einer Übergabeposition mittels der ersten Übergabevorrichtung (12) vorbeigeführt und eine auf die Dosenlücke folgende Dose (11) mittels der ersten Übergabevorrichtung (12) vorzugsweise mit einer im Vergleich zu einer Normalgeschwindigkeit reduzierten Geschwindigkeit, insbesondere Übertragungsgeschwindigkeit und/oder Rotationsgeschwindigkeit, auf die Fördereinrichtung (2) überführt wird, woraufhin vorzugsweise die Geschwindigkeit der Fördereinrichtung (2), vorzugsweise auf Normalgeschwindigkeit, und die Geschwindigkeit der ersten Übergabevorrichtung (12) wieder erhöht wird.

16. Verfahren nach einem der Ansprüche 14 oder 15,
**dadurch gekennzeichnet, dass** zum Füllen von Dosenlücken die erste Übergabevorrichtung (12) mit einer niedrigeren Geschwindigkeit, insbesondere Übergabegeschwindigkeit und/oder Rotationsgeschwindigkeit, betrieben wird als die ersten Übergabemittel (14).

## Claims

1. Apparatus for intermediately storing, preferably unpainted, cans (11)
• comprising a supplying conveying device (2),
• comprising an intermediate storage device (30) and
• comprising a handling device (3) which is configured and controlled to simultaneously transfer a plurality of cans (11) from the conveying device (2) into the intermediate storage device (30),
• the supplying conveying device (2) simultaneously also being a distributing conveying device, and
• the handling device (3) being configured and controlled to simultaneously transfer a plurality of cans (11) from the intermediate storage device (30) to the conveying device (2),
wherein
• a first auxiliary can storage device (8) and a first delivery apparatus (12) are arranged upstream of the conveying device (2) and can transfer cans (11) to the conveying device (2), and wherein
• a second auxiliary can storage device (15) and a second delivery apparatus (17) are arranged downstream of the conveying device (2) and can transfer cans (11) from the conveying device (2) into the second auxiliary can storage device (15).

2. Apparatus according to claim 1, **characterised in that** the first auxiliary can storage device (8) and/or the second auxiliary can storage device (15) are formed as a chain box (100), preferably comprising less than ten, more preferably less than six, still more preferably less than three, most preferably comprising one single bogie truck (104) for varying the chain length which is capable of storage.

3. Apparatus according to either claim 1 or claim 2, **characterised in that** first delivery means (14) are assigned to the first auxiliary can storage device (8) and can transfer cans (11) by a feeding conveying line (13) into the first auxiliary can storage device (8) and/or **in that** second delivery means (19) are assigned to the second auxiliary can storage device (15) and can transfer cans (11) from the second auxiliary can storage device (15) by a conveying line (13) which leads away.

4. Apparatus according to any of the preceding claims, **characterised in that** the conveying device (2) is formed as a pocket belt (5) comprising a plurality of transport pockets (6) arranged side by side, each preferably for receiving a single can (11).

5. Apparatus according to any of the preceding claims, **characterised in that** the first and/or the second delivery apparatus (12, 17) are formed as vacuum drums.

6. Apparatus according to any of the preceding claims, **characterised in that**, in a first step, a plurality of cans (11) can be removed from the conveying device (2) in a manner in which they are spaced apart from one another, can be transferred to a tray (21) of the intermediate storage device (30) in a manner in which they are spaced apart from one another and can be placed on said tray so as to be spaced apart from one another in a first row (23), and **in that**, in a second step, the handling device (3) is configured and controlled to remove additional cans (11) from the conveying device (2) in a manner in which they are spaced apart from one another, to transfer said cans to said tray (21) of the intermediate storage device (30) in a manner in which they are spaced apart from one another and to place said cans on said tray so as to be spaced apart from one another in a second row (24) which is arranged parallel to the first row (23) and in front of or behind the first row (23).

7. Apparatus according to claim 6, **characterised in that** the handling device (3) is configured and controlled in such a way that the rows of cans (11) are placed on the tray (21) of the intermediate storage device (30) so as to be spaced apart from one another or in such a way that two adjacent rows of cans (11) are only in contact at the end faces of the cans.

8. Apparatus according to any of the preceding claims, **characterised in that** the handling device (3) comprise suction means (7) for holding the cans (11), in particular on the, preferably unpainted, outer surfaces thereof.

9. Apparatus according to any of the preceding claims, **characterised in that** the intermediate storage device (30) is formed as a stack storage device, which is preferably configured for forming the tray stack (20) in a manner in which the trays (21) are inserted from below into the tray stack (20).

10. Apparatus according to any of claims 5 to 9, **characterised in that** the trays (21) comprise a plurality of mutually parallel depositing spaces (22) arranged side by side which are formed so as to prevent a row, which extends perpendicular to the depositing spaces (22), of cans (11) from being in contact, and **in that** the depositing spaces (22) are consistently formed in the direction of their longitudinal extension in such a way that a can (11) is displaceable along the longitudinal extension of each depositing space (22) in said depositing space.

11. Apparatus according to any of claims 5 to 10, **characterised in that** all the cans (11) can be placed on the tray (21) in a common horizontal plane.

12. Apparatus according to any of claims 5 to 11, **characterised in that** the handling device (3) is configured and controlled to remove a plurality of cans (11) from a tray (21) of the intermediate storage device (30) in a manner in which they are spaced apart from one another and to transfer said cans to the conveying device (2) in a manner in which they are spaced apart from one another and to transfer said cans thereon in a manner in which they are spaced apart from one another.

13. Method for intermediately storing, preferably unpainted, cans (11), preferably using an apparatus (1) for intermediately storing cans (11) according to any of the preceding claims,
wherein a plurality of cans (11) are simultaneously transferred from a supplying conveying device (2) into an intermediate storage device (30) by means of a handling device (3) for filling an intermediate storage unit,
wherein the supplying conveying device (2) is simultaneously also a distributing conveying device (2), and wherein a plurality of cans (11) are simultaneously transferred from the intermediate storage device (30) onto said conveying device (2) by means of the handling device (3) for emptying the intermediate storage device (30),
wherein a first auxiliary can storage device (8) in which cans (11) are stored and a first delivery apparatus (12) are arranged upstream of the conveying device (2), by means of which delivery apparatus cans (11) are transferred to the conveying device (2), and
wherein a second auxiliary can storage device (15) in which cans (11) are stored and a second delivery apparatus (17) are arranged downstream of the conveying device (2), by means of which delivery apparatus cans (11) are transferred from the conveying device (2) into the second auxiliary can storage device (15).

14. Method according to claim 13, **characterised in that** can gaps are filled by means of the first delivery apparatus (12) and preferably not by means of the first delivery means (14).

15. Method according to claim 14, **characterised in that** for filling the can gaps, the conveying device (2) is operated at a speed, preferably of greater than zero m/s, which is reduced in comparison with a normal speed and a can gap in the first auxiliary can storage device (8) is conveyed past a delivery position by means of the first delivery apparatus (12) and a can (11) following the can gap is transferred to the conveying device (2) by means of the first delivery apparatus (12), preferably at a speed, in particular a conveying speed and/or a rotational speed, which is reduced in comparison with a normal speed, at which point preferably the speed of the conveying device (2) is increased, preferably to normal speed, and the speed of the first delivery apparatus (12) is increased.

16. Method according to either claim 14 or claim 15, **characterised in that** for filling can gaps, the first delivery apparatus (12) is operated at a lower speed, in particular a delivery speed and/or rotational speed, than the first delivery means (14).

## Revendications

1. Dispositif (1) pour le stockage intermédiaire de boîtes (11), de préférence non laquées,
■ avec un dispositif de transport d'entrée (2),
■ avec un dispositif de stockage intermédiaire (30), et
■ avec un dispositif de manutention (3), qui est conçu et commandé de façon à transférer simultanément plusieurs boîtes (11) du dispositif de transport (2) dans le dispositif de stockage intermédiaire (30),
■ dans lequel le dispositif de transport d'entrée (2) est simultanément un dispositif de transport de sortie, et
■ dans lequel le dispositif de manutention (3) est conçu et commandé de façon à transférer simultanément plusieurs boîtes (11) du dispositif de stockage intermédiaire (30) sur le dispositif de transport (2),
■ dans lequel le dispositif de transport (2) est précédé par un premier accumulateur de boîtes auxiliaire (8) ainsi que par un premier dispositif de transfert (12), au moyen duquel des boîtes (11) peuvent être transférées sur le dispositif de transport (2), et dans lequel
■ le dispositif de transport (2) est suivi par un deuxième accumulateur de boîtes auxiliaire (15) ainsi que par un deuxième dispositif de transfert (17), au moyen duquel des boîtes (11) peuvent être transférées du dispositif de transport (2) dans le deuxième accumulateur de boîtes auxiliaire (15).

2. Dispositif selon la revendication 1, **caractérisé en ce que** le premier accumulateur de boîtes auxiliaire (8) et/ou le deuxième accumulateur de boîtes auxiliaire (15) est/sont réalisé(s) sous la forme de convoyeur(s) à chaîne (100), de préférence avec moins de dix, de préférence encore avec moins de six, et de préférence encore avec moins de trois, de préférence en particulier avec un seul chariot(s) (104) pour faire varier la longueur de chaîne d'accumulation effective.

3. Dispositif selon l'une des revendications 1 ou 2, caractérisé en ce des premiers moyens de transfert (14) sont associés au premier accumulateur de boîtes auxiliaire (8), avec lesquels des boîtes (11) peuvent être transférées d'une ligne de transport d'alimentation (13) dans le premier accumulateur de boîtes auxiliaire (8) et/ou en ce que des deuxièmes moyens de transfert (19) sont associés au deuxième accumulateur de boites auxiliaire (15), avec lesquels des boîtes (11) peuvent être transférées du deuxième accumulateur de boîtes auxiliaire (15) à une ligne de transport d'évacuation (18).

4. Dispositif selon l'une quelconque des revendications précédentes, **caractérisé en ce que** le dispositif de transport (2) est réalisé sous la forme d'une bande à poches (5) avec une pluralité de poches de transport (6) disposées les unes à côté des autres, de préférence pour recevoir respectivement une seule boîte (11).

5. Dispositif selon l'une quelconque des revendications précédentes, **caractérisé en ce que** le premier et/ou le deuxième dispositif(s) de transfert (12, 17) est/sont réalisé(s) sous la forme de tambour à dépression.

6. Dispositif selon l'une quelconque des revendications précédentes, **caractérisé en ce qu'**avec celui-ci, dans une première étape, plusieurs boîtes (11) peuvent être prélevées du dispositif de transport (2) à distance l'une de l'autre, transférées à distance l'une de l'autre à un plateau (21) du dispositif de stockage intermédiaire (30) et déposées sur celui-ci à distance l'une de l'autre en les plaçant en une première rangée (23), et **en ce que** le dispositif de manutention (3) est conçu et commandé de telle manière que, dans une deuxième étape, d'autres boîtes (11) puissent être prélevées du dispositif de transport (2) à distance l'une de l'autre et transférées à distance l'une de l'autre au même plateau (21) du dispositif de stockage intermédiaire (30) et déposées sur celui-ci, à distance l'une de l'autre en les plaçant en une deuxième rangée (24) parallèle à la première rangée (23) et disposée devant ou derrière la première rangée (23).

7. Dispositif selon la revendication 6, **caractérisé en ce que** le dispositif de manutention (3) est conçu et commandé de telle manière que les rangées de boîtes (11) soient déposées à distance l'une de l'autre sur le plateau (21) du dispositif de stockage intermédiaire (30) ou de telle manière que deux rangées de boîtes (11) voisines se touchent exclusivement par les faces frontales de boîtes.

8. Dispositif selon l'une quelconque des revendications précédentes, **caractérisé en ce que** le dispositif de manutention (3) présente des moyens d'aspiration (7) destinés à maintenir les boîtes (11), en particulier sur leurs surfaces latérales, de préférence non imprimées.

9. Dispositif selon l'une quelconque des revendications précédentes, **caractérisé en ce que** le dispositif de stockage intermédiaire (30) est réalisé sous la forme d'un dispositif de stockage en pile, qui est de préférence réalisé de façon à introduire les plateaux (21) par le bas dans la pile de plateaux (20) pour la formation de la pile de plateaux (20).

10. Dispositif selon l'une quelconque des revendications 5 à 9, **caractérisé en ce que** les plateaux (21) présentent plusieurs fentes de dépôt (22) disposées l'une à côté de l'autre et parallèles l'une à l'autre, qui sont réalisées de façon à empêcher un contact de boîtes (11) déposées dans une rangée s'étendant perpendiculairement aux fentes de dépôt (22), et **en ce que** les fentes de dépôt (22) sont réalisées sous forme continue dans la direction de leur extension longitudinale, de telle manière qu'une boîte (11) puisse glisser dans chaque fente de dépôt (22) le long de l'extension longitudinale de celle-ci.

11. Dispositif selon l'une quelconque des revendications 5 à 10, **caractérisé en ce que** toutes les boîtes (11) sur le plateau (21) peuvent être déposées dans un plan horizontal commun.

12. Dispositif selon l'une quelconque des revendications 5 à 11, **caractérisé en ce que** le dispositif de manutention (3) est conçu et commandé de façon à prélever plusieurs boîtes (11) à distance l'une de l'autre d'un plateau (21) du dispositif de stockage intermédiaire (30), à les transférer à distance l'une de l'autre au dispositif de transport (2) et à les transférer à distance l'une de l'autre sur celui-ci.

13. Procédé pour le stockage intermédiaire de boites (11), de préférence non laquées, de préférence en utilisant un dispositif (1) pour le stockage intermédiaire de boîtes (11) selon l'une quelconque des revendications précédentes,
■ dans lequel, pour le remplissage d'un dispositif de stockage intermédiaire, on transfère simultanément plusieurs boîtes (11) d'un dispositif de transport d'entrée (2) dans un dispositif de stockage intermédiaire (30) au moyen d'un dispositif de manutention (3),
■ dans lequel le dispositif de transport d'entrée (2) est en même temps un dispositif de transport de sortie (2), et
■ dans lequel, pour vider le dispositif de stockage intermédiaire (30), on transfère simultanément plusieurs boîtes (11) hors du dispositif de stockage intermédiaire (30) sur ce dispositif de transport (2) au moyen du dispositif de manutention (3),
■ dans lequel le dispositif de transport (2) est précédé par un premier accumulateur de boîtes auxiliaire (8) dans lequel des boites (11) sont accumulées ainsi que par un premier dispositif de transfert (12), au moyen duquel des boîtes (11) sont transférées sur le dispositif de transport (2), et
■ dans lequel le dispositif de transport (2) est suivi par un deuxième accumulateur de boîtes auxiliaire (15) dans lequel des boîtes (11) sont accumulées ainsi que par un deuxième dispositif de transfert (17), au moyen duquel des boîtes (11) sont transférées du dispositif de transport (2) dans le deuxième accumulateur de boîtes auxiliaire (15).

14. Procédé selon la revendication 13, **caractérisé en ce que** l'on effectue le remplissage des emplacements de boîte inoccupés avec le premier dispositif de transfert (12) et de préférence pas avec les premiers moyens de transfert (14).

15. Procédé selon la revendication 14, **caractérisé en ce que**, pour remplir les emplacements de boîte inoccupés, on conduit le dispositif de transport (2) avec une vitesse réduite par rapport à une vitesse normale, de préférence supérieure à zéro m/s, on fait passer un emplacement de boîte inoccupé dans le premier accumulateur de boîtes auxiliaire (8) devant une position de transfert au moyen du premier dispositif de transfert (12) et on transfère une boîte (11) qui suit l'emplacement de boîte inoccupé au moyen du premier dispositif de transfert (12) de préférence avec une vitesse réduite par rapport à une vitesse normale, en particulier une vitesse de transfert et/ou une vitesse de rotation, sur le dispositif de transport (2), puis on augmente de nouveau la vitesse du dispositif de transport (2), de préférence à la vitesse normale, et la vitesse du premier dispositif de transfert (12).

16. Procédé selon l'une des revendications 14 ou 15, **caractérisé en ce que**, pour remplir des emplacements de boîte inoccupés, on conduit le premier dispositif de transfert (12) avec une vitesse plus basse, en particulier une vitesse de transfert et/ou une vitesse de rotation, que les premiers moyens de transfert (14).
